# EUROPÄISCHE PATENTANMELDUNG

(11) **EP 4 542 443 A1**
(43) Veröffentlichungstag der Anmeldung: **23.04.2025**
(21) Anmeldenummer: 24205721.4
(22) Anmeldetag: 10.10.2024
(51) Int. Cl.: G06K 19/077, A47F 5/00, G06Q 10/087, G06Q 20/20, G09F 3/20, H01Q 1/22, A47B 63/00

(54) **ERFASSUNGSVORRICHTUNG FÜR BEFÜLLBARE BEHÄLTER SOWIE REGALSYSTEME**

(30) Priorität: 20.10.2023 DE 202023106078 U
(71) Anmelder: KaWe Engineering GmbH, 33154 Salzkotten (DE)
(72) Erfinder: Wendisch, Jan, 33154 Salzkotten (DE)
(74) Vertreter: Ostermann, Thomas

(57) **Zusammenfassung**

Die Erfindung betrifft eine Vorrichtung zum Erfassen von mit Gegenständen befüllbaren Behältern, wobei mehrere Behälter nebeneinander und/oder übereinander und/oder hintereinander angeordnet sind, mit an den jeweiligen Behältern angebrachten Kennzeichnungslabeln, die jeweils einen Chip und eine Antenne aufweisen, wobei in dem Chip eine Kennung zur Kennzeichnung von in den jeweiligen Behältern angeordneten Gegenstände gespeichert sind, und mit einer Leseeinrichtung zum Auslesen der Kennung, wobei im Bereich mindestens eines Behältern eine Trennwand angeordnet ist, die eine mit einer Auswerteeinheit der Leseeinrichtung gekoppelte Leseantenne aufweist zum Übertragen der in dem Chip des Kennzeichnungslabels gespeicherten Kennung an die Auswerteeinheit der Leseeinrichtung.

## Beschreibung

Die Erfindung betrifft eine Vorrichtung zum Erfassen von mit Gegenständen befüllbaren Behältern, wobei mehrere Behälter nebeneinander und/oder übereinander und/oder hintereinander angeordnet sind, mit an den jeweiligen Behältern angebrachten Kennzeichnungslabeln, die jeweils einen Chip und eine Antenne aufweisen, wobei in dem Chip eine Kennung zur Kennzeichnung von in den jeweiligen Behältern angeordneten Gegenstände gespeichert sind, und mit einer Leseeinrichtung zum Auslesen der Kennung.

Ferner betrifft die Anmeldung ein Regalsystem und Trennwände für das Regalsystem nach dem Patentanspruch 12.

Bekannte Regalsysteme bestehen aus einem Regalkorpus, der eine Mehrzahl von übereinander angeordnete, in jeweils horizontaler Richtung verlaufende Böden aufweist. Auf den Böden ist eine Mehrzahl von mit Gegenständen befüllbare Behältern angeordnet. In den Behältern sind Gegenstände, wie beispielsweise Befestigungsmittel unterschiedlichen Typs oder andere Montagemittel, sortiert gelagert, die zur Verwendung in einer Fertigungsstätte vorgesehen sind. Es ist bekannt, jedem Behälter mit einem Kennungslabel zu versehen enthaltend einen Chip und eine Antenne (Transponder), mittels dessen die Gegenstände des jeweiligen Behälters identifizierbar sind. Falls die Gegenstände eines Behälters aufgebraucht sind, kann der nunmehr leere Behälter in den Nahbereich einer zentralen Leseeinrichtung gebracht werden, so dass die in dem Kennungslabel gespeicherte Kennung ausgelesen werden kann. Mittels einer Verarbeitungseinheit wird das Lesesignal dazu benutzt, ein Nachfüllsignal zu erzeugen, mittels dessen Gegenstände nachbestellt werden, so dass nach Erhalt derselben der leere Behälter mit diesen Gegenständen befüllt werden kann, um dann in dem Regalsystem wieder eingesetzt zu werden. Nachteilig an dem bekannten Regalsystem ist, dass aufgrund eines manuellen Zwischenschrittes durch eine menschliche Person eine gewissen Fehleranfälligkeit gegeben ist. Vergisst der Anwender beispielsweise den leeren Behälter an die Leseeinrichtung zu halten, erfolgt keine Nachbestellung der entsprechenden Gegenstände.

Aus der DE 10 2007 059 168 B4 ist eine Transpondereinheit bekannt, die zur Erhöhung der Reichweite nicht nur einen Chip und eine magnetische Koppelantenne, sondern darüber hinaus eine weitere Antenne aufweist, die als eine Schlitzantenne ausgebildet ist. Der Chip und die Koppelantenne sind beispielsweise an einem Ende eines Schlitzes der Schlitzantenne angeordnet. Die Schlitzantenne dient hier als Übertragungsantenne für die Kommunikation zwischen dem Chip und einer externen Leseeinrichtung.

Aufgabe der vorliegenden Erfindung ist es, eine Vorrichtung zum Erfassen von mit Gegenständen befüllbaren Behältern bzw. ein Regalsystem derart weiterzubilden, dass auf einfache Weise ein automatisches Nachfüllen der Behälter mit Gegenständen ermöglicht wird.

Zur Lösung dieser Aufgabe weist die Erfindung die Merkmale des Patentanspruchs 1 auf.

Der besondere Vorteil der Erfindung besteht darin, dass durch die Integration einer Leseantenne in eine Trennwand, die im Bereich eines Behälters angeordnet ist, auf einfache Weise ein Auslesen von jeweils an einem Behälter befestigten Kennungslabeln ermöglicht wird. Die Leseantenne ist somit platzsparend in der Trennwand integriert, die zur Begrenzung von Fächern dient, in denen jeweils mindestens ein Behälter angeordnet ist. Zudem kann die Leseinformation dazu genutzt werden, den Befüllungszustand der Behälter zu erkennen. Befindet sich der Behälter an dem vorgesehenen Platz, beispielsweise in einem Fach eines Regalsystems, kann davon ausgegangen werden, dass er mit den entsprechenden Gegenständen befüllt ist. Befindet sich der Behälter nicht in dem Fach, kann davon ausgegangen werden, dass der Behälter sich in einem leeren Zustand befindet. Nur in einem leeren Zustand wird der Behälter nach Ingebrauchnahme bzw. Herausnehmen von Gegenständen nicht wieder an den hierfür vorgesehenen Platz gestellt, sondern wird beispielsweise zum Nachbestellen der entsprechenden Gegenstände an eine andere Stelle platziert. Grundgedanke der Erfindung ist es, eine Leseantenne ortsfern von einer Signalverarbeitung der Leseeinrichtung und/oder ortsfern von einem Signalverarbeitungsabschnitt der Leseeinrichtung einerseits und in der Nähe des Kennungslabels andererseits anzuordnen, so dass ein Auslesen des Kennungslabels am Ort desselben bzw. des Behälters erfolgt. Hierdurch werden menschliche Verarbeitungsschritte reduziert.

Nach einer bevorzugten Ausführungsform der Erfindung ist die Leseantenne als eine Schlitzantenne ausgebildet, wobei die Schlitzantenne durch einen Schlitz innerhalb eines in der Trennwand integrierten Metallmaterials gebildet ist. Vorzugsweise besteht die gesamte Trennwand aus einem Metallmaterial, wobei der Schlitz durch Einschneiden oder Lasern einer langgestreckten Öffnung erzeugt wird. Vorteilhaft kann durch die Schlitzantenne auf einfache Weise ein Lesen bzw. Übertragen der ortsfern von der Leseeinrichtung angeordneten Kennungslabel der Behälter erzielt werden. Der Herstellungsaufwand ist relativ gering.

Nach einer Weiterbildung der Erfindung erfolgt eine Lesesignalweiterleitung von der Schlitzantenne an einen Signalverarbeitungsabschnitt der Leseeinrichtung durch ein Kabel. Die Leseantenne ist auf das Kabel bzw. den Leitungswellenwiderstand des Kabels abgestimmt, so dass kein Leitungstransformator erforderlich ist.

Nach einer Weiterbildung der Erfindung ist die Schlitzantenne derart geformt an der Trennwand ausgebildet, dass eine elektromagnetische Kopplung zu der Antenne des Kennungslabels besteht, das an der zumindest benachbart zu der Trennwand angeordneten Behälter angebracht ist. Je nach Anordnung des Kennungslabels können von derselben Schlitzantenne Kennungen mehrerer Kennungslabel gelesen werden. Wesentlich ist, dass die Anzahl der Trennwände so groß ist, dass alle jeweils den Behältern zu geordnete Kennungslabel ausgelesen werden können. Anderenfalls würden Behälter "übersehen" werden.

Nach einer Weiterbildung der Erfindung ist der Schlitz der Schlitzantenne sowie die Trennwand langgestreckt ausgebildet, wobei sich in Längserstreckung der Trennwand eine oder mehrere Schlitze erstrecken. Handelt es sich um ein Regalsystem, in dem mehrere Behälter hintereinander angeordnet sind, beispielsweise im Regalsystem mit einem nach vorne hin geneigtem Boden, kann hierdurch sichergestellt werden, dass alle hintereinander angeordnete Behälter durch eine der Schlitzantennen der Trennwand erfasst werden.

Nach einer Weiterbildung der Erfindung weist die Leseeinrichtung eine Auswerteeinheit zur Auswertung der übertragenden Lesedaten auf, wobei aus den Lesedaten die jeweils den Behältern zugeordneten Kennungen der Kennungslabel ermittelt werden. Werden die den jeweiligen Gegenständen zugewiesenen Kennungen ermittelt, geht die Auswerteeinheit davon aus, dass die Behälter noch mit den entsprechenden Gegenständen befüllt sind. Wird eine der vorgegebenen Kennungen nicht ermittelt, weil der Behälter von dem vorgesehenen Platz entfernt worden ist, wird davon ausgegangen, dass der Behälter leer ist und damit die entsprechenden Gegenstände nachbestellt werden müssen. Vorzugsweise wird das Nachbestellsignal von der Auswerteeinheit erst erzeugt, wenn eine vorgegebene Verzögerungszeit abgelaufen ist. Die Verzögerungszeit ist größer als die Zeit, die ein Nutzer dafür braucht, eine Anzahl von Gegenständen aus dem Behälter zu entnehmen und den Behälter wieder zurück an den Platz zu stellen. Auf diese Weise wird eine Fehlnachbestellung ausgeschlossen.

Zur Lösung der Aufgabe ist ein Regalsystem mit einem Regalkorpus vorgesehen, der eine Mehrzahl von übereinander angeordneten Böden aufweist, auf die die mit den jeweiligen Gegenständen befüllten Behälter angeordnet sind. Der Regalkorpus weist Befestigungsmittel auf, so dass die Trennwände in einer aufrechten Position sicher an dem Regalkorpus montiert sind. Zwischen den Trennwänden bilden sich Fächer aus, an denen die Behälter platzierbar sind. Vorteilhaft wird ein Regalsystem geschaffen, bei dem der Automatisierungsgrad für das Nachbestellen von Gegenständen weitestgehend erhöht wird und die Fehleranfälligkeit für das Nichtbestellen von erforderlichen Gegenständen vermieden wird.

Zur Lösung der Erfindung sind Trennwände vorgesehen, die eine Doppelfunktion aufweisen. Zum einen dienen sie zur Trennung von Fächern, in denen Behälter platzierbar sind. Zum anderen weisen sie eine Leseantennen auf, mittels derer in einem Kennungslabel abgespeicherte Kennungen von Gegenständen, die sich in einem Behälter befinden, an denen das Kennungslabel angebracht ist, einfach ausgelesen werden können.

Ein Ausführungsbeispiel der Erfindung wird nachfolgend anhand der Zeichnungen näher erläutert.

Es zeigen:

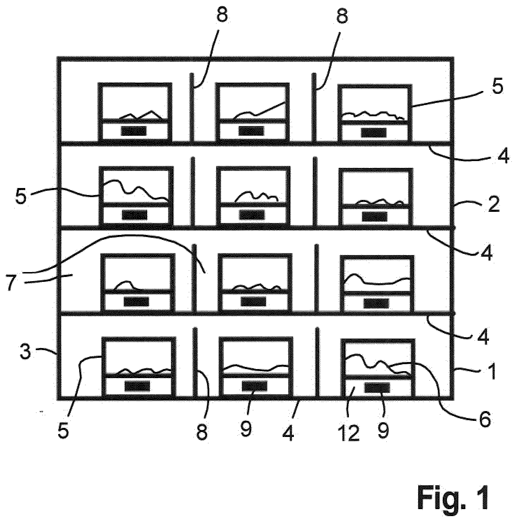

- Figur 1: eine Vorderansicht eines Regalsystems und
- Figur 2: ein Blockschaltbild der erfindungsgemäßen Vorrichtung.

Ein Regalsystem 1 besteht aus einem Regalkorpus 2 enthaltend vertikale Streben 3 und nicht dargestellte horizontale Streben. In dem Regalkorpus 2 sind in üblicherweise eine Mehrzahl von übereinander angeordnete Regalböden 4 an den Streben 3 arretiert. Die Regalböden 4 dienen zur Aufnahme von Behältern 5, die mit vorgegebenen Gegenständen 6 befüllbar sind.

Die Böden 4 können beispielsweise als Schrägböden ausgebildet sein, die zu einer Vorderseite des Regalkorpus' 2 geneigt verlaufen, so dass nach Entnahme eines vorderen Behälters 5 aus einem Fach 7 des Regalsystems 1 der nächstgelegene hintere Behälter 5 selbsttätig aufgrund seines Eigengewichtes nach vorne verschoben wird.

Die Gegenstände 6 können beispielsweise Befestigungsmittel, insbesondere Schrauben unterschiedlichen Typs oder andere Montagemittel, umfassen. Die Behälter 5 jeden Faches 7 weisen die gleichen Gegenstände 6 auf. Die Behälter 5 unterschiedlicher Fächer 7 weisen unterschiedliche Gegenstände 6 auf.

Die Fächer 7 jeden Regalbodens 4 werden durch Trennwände 8 begrenzt, die über nicht dargestellte Befestigungsmittel formschlüssig und/oder kraftschlüssig an dem Regalboden 4 montiert sind.

Alternativ oder zusätzlich können die Trennwände 8 auch an dem Regalkorpus 2 bzw. einer Strebe des Regalkorpus' 2 befestigt sein.

Im vorliegenden Ausführungsbeispiel ist jedes Fach 7 links- und rechtsseitig von einer Trennwand 8 begrenzt.

Die Trennwände 8 dienen nicht nur zur Begrenzung der Fächer 7, in die jeweils eine Anzahl von hintereinander angeordneten Behälter 5 platziert werden, die jeweils die gleichen Gegenstände 6 aufweisen. Darüber hinaus sind die Trennwände 8 Bestandteil einer Vorrichtung zum Erfassen von den Behältern 5, die in dem Regalsystem 1 angeordnet sind. Denn jeder Behälter 5 ist mit einem Kennzeichnungslabel 9 versehen, das aus einem Chip 10 und einer Antenne 11 besteht (Transponder, RFID-Tag). Der Chip 10 und die Antenne 11 sind beispielsweise auf einem flexiblen Substrat aus Kunststoff und/oder Papier aufgebracht, wobei das Substrat beispielsweise mit einer Vorderseite 12 des Behälters 5 stoffschlüssig verbunden ist, beispielsweise durch Verklebung.

Der Behälter 5 ist quaderförmig ausgebildet mit einem Boden und aufrechten Seitenwänden, wobei er oben offen ist zur Befüllung und Entnahme der Gegenstände 6. Alternativ kann der Behälter lediglich einen Boden oder eine Platte aufweisen zur Aufnahme von Gegenständen. Der Behälter dient somit als Träger von Gegenständen, Bauteilen oder dergleichen. Er kann als Ladungsträger bezeichnet werden.

Vorzugsweise sind die Behälter 5 gleich groß ausgebildet. An der Vorderseite 12 können die Behälter 5 zusätzlich eine Beschriftung aufweisen, mittels derer die Gegenstände bezeichnet sind, mit denen der Behälter 5 befüllt ist.

Die Trennwand 8 weist eine Leseantenne 13 auf, mittels derer die vorzugsweise in benachbart angeordneten Behältern 5 angebrachte Kennungslabel 9 auf ihre Kennung hin ausgelesen werden können. Die Leseantenne 13 ist Teil einer Leseeinrichtung 14, die zum Auslesen der Kennungen der Kennungslabel 9 dient. Die Leseeinrichtung 13 weist einen Transceiver 25 und eine Weiche 16 als Teil eines Signalverarbeitungsabschnitts 26 auf, der ortsfern zu der Leseantenne 13 angeordnet ist, vorzugsweise neben dem Regalkorpus 2.

Die Leseantenne 13 bzw. die Trennwand 8 ist ortsnah in einem Abstand a zu dem Kennungslabel 9 angeordnet.

Damit ein durch die Leseantenne 13 empfangenes Lesesignal 19 an den ortsfern angeordneten Signalverarbeitungsabschnitt 26 der Leseeinrichtung 14 übertragen werden kann, ist ein Kabel 14 vorgesehen. Das eine Ende des Kabels 14 ist an der Leseantenne 13 und das andere Ende des Kabels 14 an der Weiche 16 des Signalverarbeitungsabschnitts 26 kontaktiert.

Die Weiche 16 weist mehrere Eingänge E1, E2...En auf, an denen jeweils die zu den Leseantennen 13 führenden Kabel 14 angeschlossen sind. Die von den Kabeln 14 parallel anliegenden Lesesignale 19 werden mittels der Weiche 16 in sequentielle Lesedaten 19 umgewandelt. Die Weiche 16 funktioniert nach Art eines Multiplexers, der parallel vorliegende Signale in sequentielle Signale umwandelt.

Die elektrischen Kabel 15 können beispielweise durch Kabelbinder an den Streben des Regalkorpus' 2 platzsparend festgelegt sein.

Nach dem hier beschriebenen Ausführungsbeispiel ist die Leseantenne 13 als eine Schlitzantenne ausgebildet, die in der Trennwand 8 integriert ist. Zu diesem Zweck besteht vorzugsweise die gesamte Trennwand 8 aus einem Metallmaterial. In diesem Metallmaterial ist ein Schlitz 17 durch Lasern oder Einschneiden eingebracht, der eine vorgegebene Länge I und eine Schlitzbreite b aufweist.

Vorzugsweise ist die Trennwand 8 und die Schlitzantenne 13 langgestreckt ausgebildet. Die Schlitzantenne 13 erstreckt sich vorzugsweise im Bereich einer Längsmittelebene M_{L} der Trennwand.

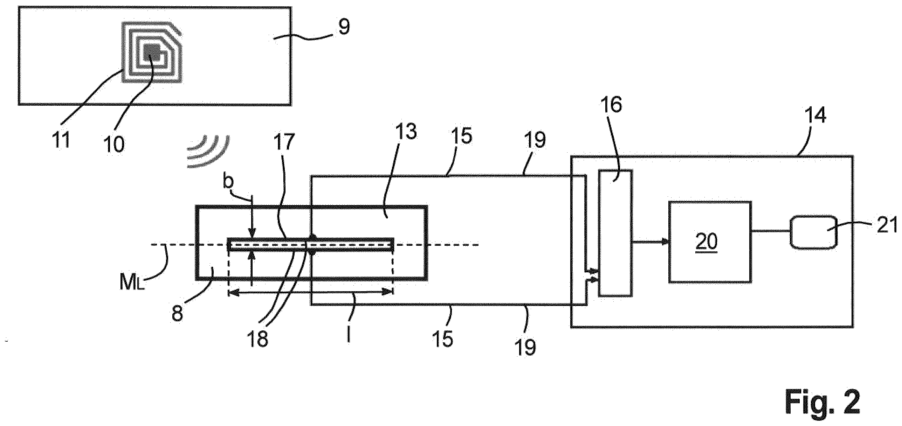

Wie aus Figur 2 zu ersehen ist, ist das Kabel 15 als ein Koaxialkabel ausgebildet, wobei ein erster Leiter 23 (Seele) des Kabels 15 mit einer ersten Randseite 18 der Schlitzantenne 13 und ein zweiter Leiter 24 (Außenleiter) des Kabels 15 mit einer gegenüberliegenden zweiten Randseite 18 der Schlitzantenne 13 elektrisch verbunden.

Die von den Kabeln 15 gleichzeitig übertragenen Lesesignale 19 werden von der Weiche 16 in sequentielle und vorzugsweise digitale Lesesignale 19 umgewandelt. Diese sequentiellen Lesesignale 19 werden durch den Transceiver 25 empfangen und zu digitalen Lesedaten verarbeitet.

Diese digitalen Lesedaten werden dann in einer Auswerteeinheit 20 der Leseeinrichtung 14 auf das Vorhandensein der Behälter 5 in dem Regalsystem überprüft. Zu diesem Zweck weist die Auswerteeinheit 20 eine Auswerteroutine 21 auf, mittels derer die digitalen Lesedaten daraufhin überprüft werden, ob alle Kennungen der Behälter 5 ausgelesen sind. Befindet sich einer der Behälter 5 nicht in dem Regalsystem 1, weil er aufgrund seines leeren Zustands, d. h. er enthält keine Gegenstände 6, aus dem Regalsystem 1 entfernt worden ist, fehlt die diesem Behälter 5 zugewiesene Kennung in der Auswerteeinheit 20. Denn in einem Speicher der Auswerteeinheit 20 sind alle Kennungen der dem jeweiligen Behälter 5 zugewiesenen Gegenstände 6 abgespeichert. Die Anzahl der Kennungen entspricht somit der Anzahl der Behälter 5 in dem Regalsystem 1. Fehlt eines der Behälter 5, kann auch nicht die entsprechende Kennung des Behälters 5 gelesen werden, so dass die Auswerteroutine 21 aufgrund der hierdurch bewirkten fehlenden Kennung ein Nachbestellungssignal 22 erzeugt, mittels dessen die aufgrund des fehlenden Behälters 5 abgeleiteten fehlenden Gegenstände 6 nachbestellt werden.

Nach einer bevorzugten Ausführungsform der Erfindung wird ein solches Nachbestellungssignal 22 erst nach einer Verzögerungszeit erzeugt, die größer ist als eine Zeitspanne, innerhalb derer im Normalfall der Behälter 5 von einer Person aus dem Fach 7 entfernt, eine Anzahl von Gegenständen aus dem Behälter 5 entnommen und derselbe noch befüllte Behälter 5 wieder in das Regalsystem 1 an den Platz eingesetzt wird. Auf diese Weise wird eine fehlerhafte Nachbestellung im Falle eines noch mit Gegenständen 6 befüllten Behälters 5 vermieden.

Der Schlitz 17 kann geradlinig oder beispielsweise V-förmig oder beliebig verlaufen. Die Formgebung des Schlitzes 17 ist abhängig von der Größe der Fächer 7 bzw. der Behälter 5.

Die Länge l des Schlitzes 17 ist auf die Wellenlänge λ des zu übertragenen Hochfrequenzsignals abgestimmt. Die Länge l des Schlitzes 17 entspricht vorzugsweise der halben Wellenlänge λ oder eines Vielfachen der halben Wellenlänge λ des speisenden hochfrequenten Signals, dessen Frequenz im UHF-Bereich (868 MHz bis 2,45 GHz) liegt.

Im vorliegenden Ausführungsbeispiel wird jedes Fach 7 von aufrechten Trennwänden 8 begrenzt. Die Anzahl der Schlitzantennen 13 pro Trennwand 8 ist abhängig von einer Tiefe des Regalsystems 1, also abhängig von der Anzahl der hintereinander angeordneten Behälter 5. Im vorliegenden Regalsystem 1 sind die Behälter 5 in vertikaler Richtung übereinander und in horizontaler Richtung nebeneinander sowie zusätzlich hintereinander angeordnet.

Alternativ oder zusätzlich können die Leseantennen bzw. Schlitzantennen auch in dem Boden integriert sein, wenn die Behälter 5 relativ groß dimensioniert sind.

Alternativ können die Leseantennen 13 jeweils mit zwei Kabeln verbunden sein zur Weiterleitung des Lesesignals 19 an den Signalverarbeitungsabschnitt 26. Jedes der beiden Kabel ist mit der unterschiedlichen, vorzugsweise gegenüberliegenden, Randseite 18 der Schlitzantenne 13 verbunden.

Alternativ kann das Kabel 15 statt unter direkter Kontaktierung (elektrische Verbindung) mit der Leseantenne 13 über ein Koppelmodul mit derselben gekoppelt sein, wobei das Koppelmodul induktiv und/oder kapazitiv mit der Leseantenne 13 bzw. mit dem Schlitz 17 der Leseantenne 13 gekoppelt ist.

## Patentansprüche

1. Vorrichtung zum Erfassen von mit Gegenständen (6) befüllbaren Behältern (5), wobei mehrere Behälter (5) nebeneinander und/oder übereinander und/oder hintereinander angeordnet sind, mit an den jeweiligen Behältern (5) angebrachten Kennzeichnungslabeln (9), die jeweils einen Chip (10) und eine Antenne (11) aufweisen, wobei in dem Chip (10) eine Kennung zur Kennzeichnung von in den jeweiligen Behältern (5) angeordneten Gegenstände (6) gespeichert sind, und mit einer Leseeinrichtung (14) zum Auslesen der Kennung, **dadurch gekennzeichnet, dass** im Bereich mindestens eines Behältern (5) eine Trennwand (8) angeordnet ist, die eine mit einer Auswerteeinheit (20) der Leseeinrichtung (14) gekoppelte Leseantenne (13) aufweist zum Übertragen der in dem Chip (10) des Kennzeichnungslabels (9) gespeicherten Kennung an die Auswerteeinheit (20) der Leseeinrichtung (14).

2. Vorrichtung nach Anspruch 1, **dadurch gekennzeichnet, dass** die Leseantenne (13) als eine Schlitzantenne ausgebildet ist, die durch einen Schlitz (17) innerhalb eines in der Trennwand (8) integrierten Metallmaterials gebildet ist.

3. Vorrichtung nach Anspruch 2, **dadurch gekennzeichnet, dass** der Schlitz (17) eine Länge (l) der halben Wellenlänge (λ) oder eines Vielfachen der halben Wellenlänge (λ) des übertragenen Signals entspricht.

4. Vorrichtung nach einem der Ansprüche 1 bis 3, **dadurch gekennzeichnet, dass** die Trennwand (8) vollständig oder teilweise aus dem Metallmaterial oder dass die Trennwand (8) vollständig oder teilweise aus einem elektrisch leitenden Material besteht.

5. Vorrichtung nach einem der Ansprüche 1 bis 4, **dadurch gekennzeichnet, dass** die Leseantenne (13) über ein Kabel (15) mit der Auswerteeinheit (20) der Leseeinrichtung (14) gekoppelt ist, wobei an einer ersten Randseite (18) des Schlitzes (17) ein erster Leiter (23) des Kabels (15) und an einer zweiten Randseite (18) des Schlitzes (17) ein zweiter Leiter (24) des Kabels (15) kontaktiert ist.

6. Vorrichtung nach einem der Ansprüche 1 bis 5, **dadurch gekennzeichnet, dass** die Schlitzantenne (13) derart geformt an der Trennwand (8) ausgebildet ist und/oder die Trennwand (8) in einem solchen Abstand (a) zu dem Kennzeichnungslabel (9) angeordnet ist, dass eine elektromagnetische Kopplung zu der Antenne (11) des Kennzeichnungslabels (9) besteht.

7. Vorrichtung nach einem der Ansprüche 1 bis 6, **dadurch gekennzeichnet, dass** der Schlitz (17) der Schlitzantenne (13) und die Trennwand (8) langgestreckt ausgebildet sind, wobei sich in Längsrichtung der Trennwand (8) ein oder mehrere Schlitze (17) erstrecken.

8. Vorrichtung nach einem der Ansprüche 1 bis 7, **dadurch gekennzeichnet, dass** die Leseeinrichtung (14) eine Weiche (16) zum Zusammenführen von über mehrere Kabel (15) übertragene Lesesignale (19) in sequentielle Lesesignale aufweist, wobei die Weiche (16) mehrere Eingänge (E1, E2, En) aufweist, an denen jeweils ein anderes Ende der mit den Leseantennen (13) gekoppelten Kabel (15) angeschlossen ist.

9. Vorrichtung nach einem der Ansprüche 1 bis 8, **dadurch gekennzeichnet, dass** die Leseeinrichtung (14) einen Transceiver (25) aufweist zum Senden von Signalen an das Kennungslabel (9) und zum Empfangen des Lesesignals (19) von dem Kennungslabel (9).

10. Vorrichtung nach einem der Ansprüche 1 bis 9, **dadurch gekennzeichnet, dass** die Auswerteeinheit (20) eine Auswerteroutine (21) aufweist, mittels derer ein Nachbestellungssignal (22) für die Gegenstände (6) erzeugt wird, die in den Behältern (5) vorgesehen sind, dessen Kennung nicht auslesbar ist.

11. Vorrichtung nach einem der Ansprüche 1 bis 10, **dadurch gekennzeichnet, dass** die Auswerteroutine (21) zur Erzeugung des Nachbestellungssignals (22) eine vorgegebene Verzögerungszeit nach Erkennung des Nichtvorhandenseins der Kennung vorsieht, nach dessen Ablauf das Nachbestellungssignal (22) erzeugt wird.

12. Regalsystem zur Aufnahme einer Mehrzahl von jeweils mit Gegenständen (6) befüllbaren Behältern (5) mit einem Regalkorpus (2), der eine Mehrzahl von übereinander angeordneten Regalböden (4) aufweist, auf denen die Behälter (5) platzierbar sind, **dadurch gekennzeichnet, dass** der Regalkorpus (2) Befestigungsmittel aufweist zur Montage von aufrechten Trennwänden (8) nach einem der Ansprüche 1 bis 11.

13. Regalsystem nach Anspruch 12, **dadurch gekennzeichnet, dass** die Befestigungsmittel derart ausgebildet sind, dass die Trennwände (8) formschlüssig und/oder kraftschlüssig mit dem Regalkorpus (2) und/oder dem Regalboden (4) verbunden sind.

14. Regalsystem nach Anspruch 12 oder 13, **dadurch gekennzeichnet, dass** die Regalböden (4) als Schrägböden ausgebildet sind, die jeweils zu einer Vorderseite (12) des Regalkorpus' (2) nach unten geneigt angeordnet sind, und dass die Trennwände (8) derart angeordnet sind, dass sich Fächer (7) zwischen zwei benachbarten Trennwänden (8) bilden, in denen ein einziger Behälter (5) oder eine Reihe von hintereinander angeordneten Behältern (5) platzierbar sind.

15. Trennwände für Regalsysteme (1) nach einem der Ansprüche 1 bis 11.
